# EUROPÄISCHE PATENTSCHRIFT

(11) **EP 0 967 121 B1**
(45) Veröffentlichungstag und Bekanntmachung des Hinweises auf die Patenterteilung: **02.01.2004**
(21) Anmeldenummer: 99109342.8
(22) Anmeldetag: 31.05.1999
(51) Int. Cl.: B60R 16/02

(54) **Verfahren und Steuereinrichtung zur Minimierung von Unfallfolgen**
Procedure and control device for minimizing the consequence of an accident.
Procédé et dispositif de commande pour minimiser les suites d'accident

(30) Priorität: 26.06.1998 DE 19828693
(43) Veröffentlichungstag der Anmeldung: 29.12.1999
(73) Patentinhaber: Volkswagen Aktiengesellschaft, 38436 Wolfsburg (DE)
(72) Erfinder: Kopischke, Stephan, 38442 Wolfsburg (DE)

(56) Entgegenhaltungen:
- EP-A- 0 649 776
- DE-C- 4 226 747
- DE-C- 19 534 942
- US-A- 5 332 057
- US-A- 5 473 538

## Beschreibung

Die Erfindung betrifft ein Verfahren zur Minimierung von Unfallfolgen bei Kraftfahrzeugen gemäß Oberbegriff des Anspruchs 1 sowie eine Steuereinrichtung zur Durchführung dieses Verfahrens.

Es sind Systeme für Fahrzeuge bekannt, die den Fahrer in kritischen Situationen in der Weise unterstützen, daß ein bevorstehender Unfall durch ein optimales Abbremsen möglichst verhindert oder zumindest die Aufprallgeschwindigkeit am Kollisionspunkt auf ein Minimum reduziert wird. Ein derartiges automatisches Bremssystem ist unter der allgemeinen Bezeichnung ABS in vielen Fahrzeugen im Einsatz. Die Grundfunktion des ABS besteht darin, bei einer Notbremsung ein Blockieren der Räder zu vermeiden, um die Lenkfähigkeit des Fahrzeugs auch bei einer Vollbremsung beibehalten zu können. Der Fahrer hat dadurch die Möglichkeit, auch bei einer Vollbremsung den Kollisionspunkt zu umfahren und dadurch eine Kollision zu vermeiden, sofern es sich nicht um eine unvermeidliche Unfallsituation handelt, in der ein Ausweichen aus fahrphysikalischen Gründen überhaupt nicht mehr möglich ist.

Es sind Systeme bekannt, die durch gezieltes Beschleunigen bzw. Verzögern und/oder durch Ausweichmanöver eine Kollision des Fahrzeugs mit einem Hindernis verhindern sollen. Derartige, kurz als CAS (Collision Avoidance Systems) bezeichnete Systeme sollen das Fahrzeug aus mittels Sensoren erkannten Kollisionssituationen dadurch herausführen, daß durch eine vom Fahrer entkoppelte Lenkung und damit unabhängig vom Fahrer auszuführende Lenkbewegungen sowie ebenfalls fahrerunabhängig gesteuerte Beschleunigungen bzw. Verzögerungen des Fahrzeugs eine Kollision vermieden wird. In der EP 0 582 236 wird ein Netzwerk vorgeschlagen, das mittels Auswertung von laufender CCD-Kamera aufgenommener Umgebungsbilder die Umgebung auf mögliche Kollisionen auswertet und anhand zusätzlicher Signale des Fahrzustandes des Fahrzeuges eine Beeinflussung von Fahrzeuggeschwindigkeit und Lenkbewegung vornimmt. Eine andere Lösung schlägt die DE 43 02 527 vor, bei der durch Segmentierung des zu überwachenden Straßenbereichs unter Einbeziehung von Zustandsinformationen des Fahrzeuges Regeln abgeleitet werden, wie durch Brems- und Lenkoperationen einem erkannten Hindernis ausgewichen werden kann. Hauptproblem dieser vorgeschlagenen Systeme ist deren Komplexität, die einen in der Praxis nicht realisierbaren Aufwand darstellt. Außerdem können auch Unfallsituationen derart überraschend auftreten, daß ein Vermeiden des Unfalls durch frühzeitiges Ausweichen nicht mehr möglich ist.

Aus der EP 0 545 437 B1 ist ein Verfahren zur Vermeidung von Kollisionen von Kraftfahrzeugen bekannt, mit dem in Fahrtrichtung beabstandete Fahrzeuge erfaßbar sind und mittels Warnmeldungen der Fahrer bei unzulässigen Annäherungen gewarnt wird. Der Fahrer hat dann aufgrund des noch nicht erreichten Abstandsminimums Gelegenheit, selbst entsprechende Bremsvorgänge einzuleiten. Bei Unterschreiten eines minimal zulässigen Abstandes wird das Fahrzeug automatisch abgebremst, so daß sich der geforderte Sicherheitsabstand wieder einstellt. In einer plötzlich auftretenden Unfallsituation ist dieses System allenfalls dazu geeignet, eine automatische Notbremsung zur optimalen Geschwindigkeitsverringerung vorzunehmen.

Aus der DE 38 30 790 A1 ist weiterhin ein Verfahren und eine Vorrichtung zur automatischen Kollisionsvermeidung von automatisch führbaren Fahrzeugen bekannt, die mittels Sensoren eine laufende Erkennung von Kollisionsgefahren vornimmt. Wird eine Kollisionsgefahr festgestellt, führt das System das Fahrzeug entlang einer kollisionsfreien Fahrlinie um ein erkanntes Hindernis herum. Tritt jedoch eine unvermeidbare Unfallsituation mit einer bevorstehenden Kollision auf, so besteht bei diesem System die Gefahr, daß das automatisch gelenkte Fahrzeug aus einer günstigeren Kollisionsposition in eine für die Insassen ungünstigere Kollisionsposition gebracht wird.

Aus der DE 196 47 283 A1 ist eine Vorrichtung zur Vermeidung und/oder Minimierung von Konfliktsituationen im Straßenverkehr bekannt, die das Fahrverhalten eines Fahrzeuges in einer unvermeidlichen Unfallsituation steuern kann. Ist der Fahrzeugführer nicht mehr in der Lage, eine bevorstehenden Unfall zu vermeiden, greift die Vorrichtung ein und ergreift Maßnahmen zur Schadensbegrenzung, in dem sie beispielsweise die Kollision mit einer Mülltonne auf dem Bürgersteig dem Zusammenstoß mit einer auf der Fahrbahn befindlichen Person vorzieht. Dabei führt die Vorrichtung eine automatische Lenkfunktion durch, was einen entsprechend hohen technischen Aufwand erfordert.

Aus der EP 0 649 776 A2 (Oberbegriff von Anspruch 1 bzw. 6) ist ein System zur Überwachung und Steuerung von sicherheitsrelevanten Fahrzeuakomponenten bekannt, bei dem Abstands-Beschleunigungs- und Betriebszustandsdaten in einer Rechnereinheit verarbeitet und verknüpft werden. Je nach Gefahrensituation sollen dann nacheinander u.a. Eingriffe in das Brems- und Lenksystem veranlasst werden um Unfälle zu vermeiden oder in ihrer Auswirkung zu minimieren.

Der Erfindung liegt die Aufgabe zugrunde, ein Verfahren zur Minimierung von Unfallfolgen speziell im Hinblick auf Leben und Gesundheit der Fahrzeuginsassen im Falle einer unvermeidlichen Kollision zu schaffen, welches mit möglichst geringem technischen Aufwand realisierbar ist.

Die Lösung dieser Aufgabe erhält man mit den Merkmalen des Anspruchs 1.

Mit dem Verfahren wird in einer unvermeidlichen Unfallsituation ein Abbremsen der einzelnen Räder in der Weise vorgenommen, daß sich das Fahrzeug in eine die Unfallfolgen minimierende Lage dreht. Auf diese Weise kann ein für die Insassen des Fahrzeugs kritischer Aufprallwinkel oder ein ungünstiger Offset-Aufprall vermieden werden. Eine Auswerteeinrichtung berücksichtigt dabei fahrzeugspezifische Merkmale und die in der Unfallsituation vorhandenen fahrdynamischen Daten derart, daß eine Reduzierung der Unfallfolgen erreicht wird. In einem Speicher sind außerdem eine Vielzahl von unterschiedlichen Unfallsituationen mit jeweils zugeordneten, bevorzugten Aufprall-Sollwinkeln abgespeichert, so daß die Auswerteeinrichtung die erforderlichen Steuersignale an eine automatische Bremseinrichtung weitergeben kann, um das Fahrzeug beispielsweise in Richtung des Aufprall-Sollwinkels zu drehen.

Gemäß einer Weiterbildung der Erfindung werden die sich laufend ändernden Relativkoordinaten zwischen Fahrzeug und einem Hindernis ermittelt und die Änderungsgeschwindigkeit der Relativkoordinaten zur Steuerung des Bremsvorganges verwendet. Von der Auswerteeinrichtung kann somit erkannt werden, ob eine unvermeidliche Unfallsituation vorliegt und welche Charakteristika die spezielle Unfallsituation aufweist.

Eine unvermeidliche Unfallsituation liegt dann vor, wenn ein Ausweichen oder Anhalten vor dem Hindernis nicht mehr möglich ist. Dies kann die Auswerteeinrichtung anhand der in einem Speicher abgelegten Grenzwerte erkennen. Werden diese Grenzwerte überschritten, leitet die Auswerteeinrichtung einen automatischen Bremsvorgang ein, um eine möglichst geringe Aufprallenergie und eine möglichst optimale Fahrzeugausrichtung beim Aufprall zu erhalten. Dabei kann es durchaus zweckmäßig sein, eine etwas höhere Aufprallgeschwindigkeit zuzulassen, wenn durch entsprechende Bremsmaßnahmen dafür aber eine günstigere Aufprallposition für das Fahrzeug erreicht werden kann. Die dafür erforderlichen Entscheidungskriterien sind vorzugsweise in einem Speicher abgelegt. auf den die Auswerteeinrichtung ständig zugreifen kann.

Es kann vorteilhaft sein, die Steuerung des Bremsvorganges in Abhängigkeit von der Sitzbelegung durchzuführen. Befinden sich im Fahrzeug außer dem Fahrer keine weiteren Insassen, so kann zur Verringerung der Unfallfolgen für den Fahrer ein anderer Aufprallwinkel günstig sein, als dies der Fall wäre, wenn das Fahrzeug vollbesetzt ist.

Das Verfahren kann so ablaufen, daß in einer unvermeidlichen Unfallsituation zunächst eine maximale Verzögerung der Fahrzeuggeschwindigkeit erfolgt, bevor eine Korrektur des Aufprallwinkels oder der Aufprallposition vorgenommen wird. Ob ein derart zweistufiges Bremsverfahren zum Einsatz kommen soll, kann von der jeweils vorliegenden Unfallsituation abhängig gemacht werden.

Zur Durchführung des erfindungsgemäßen Verfahren wird außerdem eine Steuereinrichtung mit den Merkmalen des Anspruchs 7 vorgeschlagen. Die Steuereinrichtung umfaßt eine Auswerteeinrichtung, die von am Fahrzeug angebrachten Umgebungssensoren Umgebungsdaten und von der Fahrzeugelektronik interne Fahrzeugdaten erhält und anhand dieser Daten eine unvermeidliche Unfallsituation erkennt und ein individuelles Abbremsen der einzelnen Räder in der Weise veranlaßt, daß das Fahrzeug eine vorgegebene, optimale Aufprallposition anstrebt. Dabei kann insbesondere ein günstig gewählter Aufprallwinkel zur Minimierung der Unfallfolgen beitragen. Wird beispielsweise über die Umgebungssensoren ein bevorstehender seitlich versetzter Frontalaufprall erkannt, kann durch einseitiges Abbremsen der Räder eine Veränderung der Winkelposition des Fahrzeugs erreicht werden, um eine bessere Ausnutzung der am Fahrzeug vorhandenen Deformationsbereiche zu erzielen.

Bei der bevorzugten Ausführungsform besitzt die Vorrichtung einen Speicher, der fahrzeugspezifische Merkmale und Grenzwerte enthält, die in der Auswerteeinrichtung mit den Umgebungsdaten und Fahrzeugdaten ständig vergleichen und zur Steuerung des Bremsvorganges in einer Unfallsituation verwendet werden. Für unterschiedliche Fahrzeugtypen können in dem Speicher entsprechend unterschiedliche charakteristische Merkmale abgespeichert sein, so daß in optimaler Weise eine Verringerung der Unfallfolgen auch bei unterschiedlichen Fahrzeugen ohne großen technischen Aufwand erreicht werden kann. Dabei können in dem Speicher die charakteristischen Merkmale einer Vielzahl möglicher Unfallsituationen mit den jeweils zugehörigen optimalen Aufprall-Sollwinkeln gespeichert sein, wobei die Aufprall-Sollwinkel für unterschiedliche Fahrzeugtypen in der Regel auch unterschiedliche Werte haben.

Bei der bevorzugten Vorrichtung steuert die Auswerteeinrichtung über eine Bremsensteuerung, die Teil eines automatischen Bremssystems ist, das Abbremsen der einzelnen Räder. Es kann somit ein ohnehin vorhandenes automatisches Bremssystem mitverwendet werden, wodurch sich der zusätzliche technische Aufwand für das erfindungsgemäße Verfahren und die erfindungsgemäße Vorrichtung sehr klein halten läßt. In einer Unfallsituation übernimmt die Auswerteeinrichtung die Bremsensteuerung des automatischen Bremssystems, während sonst das automatische Bremssystem in der herkömmlichen Weise betrieben wird.

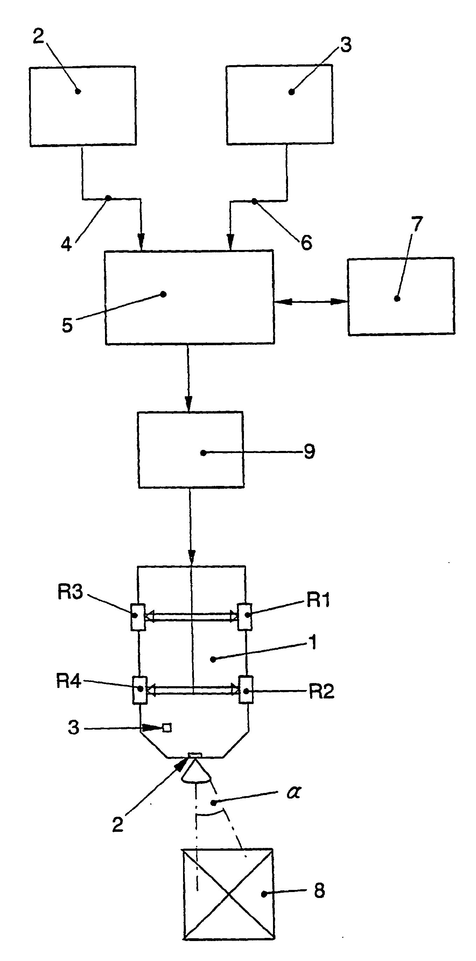

Die Erfindung wird nachfolgend anhand eines in der Zeichnung dargestellten Blockschaltbildes der Steuereinrichtung näher erläutert.

Die Steuereinrichtung besitzt an einem Fahrzeug 1 im vorderen Bereich angebrachte Umgebungssensoren 2 und verwendet auch Fahrzeugdaten der im Fahrzeug 1 befindlichen Fahrzeugelektronik 3. An dem skizzierten Fahrzeug 1 sind die Positionen der Umgebungssensoren und der Fahrzeugelektronik beispielhaft mit den Pfeilen 2 und 3 angegeben. Im Blockschaltbild der Steuereinrichtung sind entsprechende Schaltungsblöcke angegeben, die die Umgebungssensoren 2 und die Fahrzeugelektronik 3 repräsentieren.

Von den Umgebungssensoren 2 gelangen Umgebungsdaten 4 zu einer Auswerteeinrichtung 5, die von der Fahrzeugelektronik Fahrzeugdaten 6 empfängt. In einem mit der Auswerteeinrichtung 5 verbundenen Speicher 7 sind charakteristische Merkmale des Fahrzeugs und Grenzwerte sowie zugehörige ideale Aufprallwinkel bei unterschiedlichen Unfallsituationen abgelegt. Die Auswerteeinrichtung 5 kann ständig auf diese im Speicher 7 abgelegten Daten zugreifen und einen Vergleich mit den aktuellen Umgebungsdaten und Fahrzeugdaten vornehmen. Als Umgebungsdaten werden der Auswerteeinrichtung Relativkoordinaten zu möglichen Hindernissen 8 übermittelt, aus denen die Auswerteeinrichtung insbesondere die Form und den Abstand eines Hindernisses 8 feststellen kann. Die Umgebungssensoren, die als Radareinrichtung ausgebildet sein können, können auch Umgebungsdaten liefern, die es der Auswerteeinrichtung ermöglichen zu unterscheiden, ob das Hindernis 8 ein Fahrzeug oder eine Person oder ein sonstiger Gegenstand ist.

Die Fahrzeugdaten 6 können Angaben über Geschwindigkeit, Sitzbelegung, Fahrzeuggewicht, Bremspedalstellung, Gaspedalstellung enthalten. Aus den Umgebungsdaten und Fahrzeugdaten in Verbindung mit den charakteristischen Merkmalen aus dem Speicher 7 kann die Auswerteeinrichtung 5 über eine Bremsensteuerung 9 ein gezieltes Abbremsen der einzelnen Räder R1 bis R4 des Fahrzeugs 1 in der Weise vornehmen, daß das Fahrzeug 1 einen optimalen Aufprallwinkel α bezogen auf das Hindernis 8 einnimmt. Außer dem Aufprallwinkel α kann auch eine optimale Aufprallposition für das Fahrzeug 1 angestrebt werden.

Um die bei einer unvermeidlichen Unfallsituation auftretenden Unfallfolgen möglichst gering halten zu können, wertet die Auswerteeinrichtung 5 nicht nur die Umgebungsdaten 4 und die Fahrzeugdaten 6 aus, sondern berücksichtigt insbesondere die fahrzeugspezifischen Parameter bzw. die charakteristischen Merkmale des Fahrzeugtyps, die im Speicher 7 abgelegt sind. Die im Speicher 7 abgelegten Daten können in Form eines fahrzeugspezifischen Kennfeldes abgespeichert sein. Beispielsweise kann für einen bestimmten Fahrzeugtyp ein Kennfeld für den optimalen Aufprallwinkel in Abhängigkeit von der jeweiligen Fahrzeuggeschwindigkeit im Speicher 7 abgelegt sein.

## Patentansprüche

1. Verfahren zur Minimierung von Unfallfolgen bei Fahrzeugen, bei dem
- am Fahrzeug (1) vorgesehene Umgebungssensoren (2) laufend in oder nahe der Bewegungsrichtung des Fahrzeugs (1) befindliche Hindernisse (8) erfassen,
- fahrdynamische Zustandswerte als Fahrzeugdaten (6) laufend an eine Auswerteeinrichtung (5) weitergegeben werden,
- die Auswerteeinrichtung (5) mit den ihr zugeführten Daten einen laufenden Grenzwertvergleich und bei Erkennen einer bevorstehenden, unvermeidlichen Unfallsituation eine Fahrzeugbeeinflussung durch ein gesteuertes Abbremsen und/oder durch einen automatischen Lenkvorgang vornimmt,
**dadurch gekennzeichnet, daß**
für eine Vielzahl von unterschiedlichen Unfallsituationen jeweils zugeordnete, . bevorzugte Aufprall-Sollwinkel (α) abgespeichert sind und die Fahrzeugbeeinflussung darin besteht, dass bei Auftreten einer unvermeidlichen Unfallsituation der zugehörige, die Unfallfolgen minimierende Aufprall-Sollwinkel durch einen automatischen Lenkvorgang und/oder gezieltes Abbremsen der einzelnen Räder (R1 bis R2) des Fahrzeugs (1) angestrebt wird.

2. Verfahren nach Anspruch 1, **dadurch gekennzeichnet, daß** die Auswerteeinrichtung (5) die sich laufend ändernden Relativkoordinaten zwischen Fahrzeug (1) und Hindernis (8) ermittelt und die Änderungsgeschwindigkeit der Relativkoordinaten zur Steuerung des Bremsvorganges verwendet werden.

3. Verfahren nach einem der vorhergehenden Ansprüche, **dadurch gekennzeichnet, daß** eine unvermeidliche Unfallsituation dann vorliegt, wenn die Auswerteeinrichtung (5) erkennt, daß ein Ausweichen oder Anhalten vor dem Hindernis (8) nicht mehr möglich ist.

4. Verfahren nach einem der vorhergehenden Ansprüche, **dadurch gekennzeichnet, daß** die Steuerung des Bremsvorganges in Abhängigkeit von der Sitzbelegung erfolgt.

5. Verfahren nach einem der vorhergehenden Ansprüche, **dadurch gekennzeichnet, daß** die Auswerteeinrichtung (5) anhand von gemessenen Daten und fahrzeugspezifischen Merkmalen in einer unvermeidlichen Unfallsituation entscheidet, ob und wie lange eine maximale Verzögerung der Fahrzeuggeschwindigkeit erfolgen soll, bevor eine Korrektur des Aufprallwinkels oder der Aufprallposition vorgenommen wird.

6. Steuereinrichtung zur Durchführung des Verfahrens zur Minimierung der Unfallfolgen bei Fahrzeugen nach einem der Ansprüche 1 bis 5, mit einer Auswerteeinrichtung (5),
- die von am Fahrzeug (1) angebrachten Umgebungssensoren (2) Umgebungsdaten (4) und von der Fahrzeugelektronik (3) fahrdynamische Zustandswerte als Fahrzeugdaten (6) erhält,
- die zu einen laufenden Grenzwertvergleich in Bezug auf die ihr zugeführten Daten und bei Erkennen einer bevorstehenden, unvermeidlichen Unfallsituation zu einer Fahrzeugbeeinflussung durch ein gesteuertes Abbremsen und/oder durch einen automatiscken Lenkvorgang vorgesehen ist,
**dadurch gekennzeichnet, daß**
in einem mit der Auswerteeinrichtung (5) verbundenen Speicher (7) für eine Vielzahl von unterschiedlichen Unfallsituationen jeweils zugeordnete, bevorzugte Aufprall-Sollwinkel (α) abgespeichert sind und die Fahrzeugbeeinflussung darin besteht, dass bei Auftreten einer unvermeidlichen Unfallsituation der zugehörige, die Unfallfolgen minimierende Aufprall-Sollwinkel durch einen automatischen Lenkvorgang und/oder gezieltes Abbremsen der einzelnen Räder (R1 bis R2) des Fahrzeugs (1 ) angestrebt wird.

7. Vorrichtung nach Anspruch 6, **dadurch gekennzeichnet, daß** im Speicher (7) fahrzeugspezifische Merkmale und Grenzwerte gespeichert sind, die in der Auswerteeinrichtung (5) mit den Umgebungsdaten (4) und Fahrzeugdaten (6) ständig verglichen und zur Steuerung des Bremsvorganges in einer Unfallsituation verwendet werden.

8. Vorrichtung nach einem der Ansprüche 6 oder 7, **dadurch gekennzeichnet, daß** die Auswerteeinrichtung (5) über eine Bremsensteuerung (9), die Teil eines automatischen Bremssystems ist, das Abbremsen der einzelnen Räder (R1 bis R4) steuert.

## Claims

1. Method for minimizing the consequences of an accident in vehicles in which:
- ambient sensors (2), which are provided on the vehicle (1), continuously sense obstacles (8) located in or near to the direction of movement of the vehicle (1),
- state values relating to the dynamics of vehicle movement are continuously passed on, as vehicle data (6), to an evaluation device (5),
- the evaluation device (5) carries out a continuous limiting value comparison with the data fed to it, and, when an eminent, unavoidable accident situation is detected, it influences the vehicle by controlled braking and/or by means of an automatic steering procedure,
**characterized in that** respectively assigned preferred impact setpoint angles (α) are stored for a plurality of different accident situations and the influencing of the vehicle consists in the fact that, when an unavoidable accident situation occurs, endeavours are made to achieve the relevant impact setpoint angle which minimizes the consequences of the accident by means of an automatic steering procedure and/or selective braking of the individual wheels (R1 to R2) of the vehicle (1).

2. Method according to Claim 1, **characterized in that** the evaluation device (5) determines the continuously changing relative coordinates between the vehicle (1) and obstacle (8), and the speed of change of the relative coordinates is used to control the braking procedure.

3. Method as claimed in one of the preceding claims, **characterized in that** an unavoidable accident situation is present if the evaluation device (5) detects that it is no longer possible to avoid or stop before the obstacle (8).

4. Method according to one of the preceding claims, **characterized in that** the braking procedure is controlled as a function of the occupation of seats.

5. Method according to one of the preceding claims, **characterized in that**, in an unavoidable accident situation, the evaluation device (5) decides, by reference to measured data and vehicle-specific features, whether and for how long a maximum deceleration of the speed of the vehicle is to take place before the impact angle or the impact position is corrected.

6. Control device for carrying out the method for minimizing the consequences of an accident in vehicles according to one of Claims 1 to 5, having an evaluation device (5),
- which receives ambient data (4) from ambient sensors (2) mounted on the vehicle (1), and state values relating to the dynamics of vehicle movement, as vehicle data (6), from the vehicle electronics systems (3),
- which is provided for performing a continuous limiting value comparison on the data which is fed to it and for influencing a vehicle by controlled braking and/or by an automatic steering procedure when an imminent, unavoidable accident situation is detected,
**characterized in that** respectively assigned preferred impact setpoint angles (α) are stored, in a memory (7) connected to the evaluation device (5), for a plurality of different accident situations and the influencing of the vehicle consists in the fact that, when an unavoidable accident situation occurs, endeavours are made to achieve the relevant impact setpoint angle which minimizes the consequences of the accident by means of an automatic steering procedure and/or selective braking of the individual wheels (R1 to R2) of the vehicle (1).

7. Device according to Claim 6, **characterized in that** vehicle-specific features and limiting values which are continuously compared with the ambient data (4) and vehicle data (6) in the evaluation device (5) and are used to control the braking procedure in an accident situation are stored in the memory (7).

8. Device according to Claims 6 or 7, **characterized in that** the evaluation device (5) controls the braking of the individual wheels (R1 to R4) by means of a brake controller (9) which is part of an automatic brake system.

## Revendications

1. Procédé destiné à minimiser les conséquences d'un accident dans un véhicule selon lequel
- des capteurs d'environnement (2) prévus sur le véhicule (1) détectent constamment des obstacles (8) se situant dans ou près de la trajectoire du véhicule (1),
- les valeurs du comportement dynamique sont constamment transmises à un système d'interprétation (5) sous forme de données relatives au véhicule (6),
- le système d'interprétation (5) compare constamment les valeurs limites aux données qui lui sont fournies et agit sur le véhicule en le freinant de manière contrôlée et/ou en le dirigeant automatiquement s'il détermine l'imminence d'une situation d'accident inévitable,
**caractérisé en ce que**
des angles d'impact de consigne (α) préférés que l'on a associés à une pluralité de situations d'accident différentes sont mis en mémoire et que l'action sur le véhicule consiste à essayer d'atteindre, dans le cas d'une situation d'accident inévitable, l'angle d'impact de consigne associé susceptible de minimiser les conséquences de l'accident en dirigeant automatiquement et/ou en freinant de manière sélective les différentes roues (R1 à R2) du véhicule (1).

2. Procédé selon la revendication 1, **caractérisé en ce que** le système d'interprétation (5) détermine les coordonnées relatives entre le véhicule (1) et l'obstacle (8), qui varient constamment, et qu'on utilise la vitesse à laquelle varient les coordonnées relatives pour commander le freinage.

3. Procédé selon l'une quelconque des revendications précédentes, **caractérisé en ce qu'**une situation d'accident est jugée inévitable quand le système d'interprétation (5) détermine qu'il n'est plus possible d'éviter un obstacle (8) ou d'arrêter le véhicule devant celui-ci.

4. Procédé selon l'une quelconque des revendications précédentes, **caractérisé en ce que** le freinage est commandé en fonction de l'occupation des sièges.

5. Procédé selon l'une quelconque des revendications précédentes, **caractérisé en ce que**, en présence d'une situation d'accident inévitable, le système d'interprétation (5) décide, à partir de données mesurées et de caractéristiques spécifiques du véhicule, si le véhicule doit être décéléré au maximum et pour combien de temps avant de procéder à une correction de l'angle d'impact ou de la position d'impact.

6. Système de commande destiné à mettre en oeuvre le procédé pour minimiser les conséquences d'un accident dans un véhicule selon l'une quelconque des revendications 1 à 5, avec un système d'interprétation (5)
- qui reçoit de capteurs d'environnement (2) montés sur le véhicule (1) des données relatives à l'environnement (4) et de l'électronique véhicule (3) les valeurs du comportement dynamique du véhicule sous forme de données relatives au véhicule (6),
- qui compare constamment les valeurs limites aux données qui lui sont fournies et agit sur le véhicule en le freinant de manière contrôlée et/ou en le dirigeant automatiquement s'il détermine l'imminence d'une situation d'accident inévitable,
**caractérisé en ce que**
des angles d'impact de consigne (α) préférés que l'on a associés à une pluralité de situations d'accident différentes sont stockés dans une mémoire (7) reliée au système d'interprétation (5) et que l'action sur le véhicule consiste à essayer d'atteindre, dans le cas d'une situation d'accident inévitable, l'angle d'impact de consigne associé susceptible de minimiser les conséquences de l'accident en dirigeant automatiquement et/ou en freinant de manière sélective les différentes roues (R1 à R2) du véhicule (1) .

7. Dispositif selon la revendication 6, **caractérisé en ce que** des caractéristiques spécifiques du véhicule et des valeurs limites sont stockées en mémoire (7), lesdites caractéristiques et valeurs étant constamment comparées dans le système d'interprétation (5) avec les données relatives à l'environnement (4) et au véhicule (6) et utilisées dans une situation d'accident pour commander le freinage.

8. Dispositif selon l'une quelconque des revendications 6 ou 7, **caractérisé en ce que** le dispositif d'interprétation (5) commande le freinage des différentes roues (R1 à R4) par l'intermédiaire d'une commande des freins (9) faisant partie d'un système de freinage automatique.
